# EUROPEAN PATENT SPECIFICATION

(11) **EP 0 636 863 B1**
(45) Date of publication and mention of the grant of the patent: **31.10.2001**
(21) Application number: 94111487.8
(22) Date of filing: 22.07.1994
(51) Int. Cl.: G01C 21/20

(54) **Navigation system**
Navigationssystem
Système de navigation

(30) Priority: 27.07.1993 JP 20457693
(43) Date of publication of application: 01.02.1995
(73) Proprietor: AISIN AW CO., LTD., Anjo-shi Aichi-ken 444-11 (JP)
(72) Inventor: Asano, Hitoshi, Nagoya-shi, Aichi 457 (JP); Ishikawa, Wataru, Okazaki-shi, Aichi 444 (JP); Nimura, Mitsuhiro, Okazaki-shi, Aichi 444 (JP)
(74) Representative: VOSSIUS & PARTNER

(56) References cited:
- EP-A- 0 118 886
- EP-A- 0 355 232
- EP-A- 0 372 840
- DE-A- 3 510 481
- DE-A- 4 118 606
- GB-A- 2 163 282
- US-A- 4 737 927
- US-A- 4 757 455

## Description

The present invention relates to a navigation system for guiding a vehicle to a destination via a predetermined route and, more particularly, to a navigation system for enabling a detailed map on the route, as contains the roads and branching points on the route, the route in the periphery of the destination and the guide ending position, to be accessed from a route information screen.

In the prior art, the navigation system guides the route so that the vehicle can safely arrive at a first destination. In recent years, various technologies have been vigorously developed to improve the performances and functions such as the navigation accuracy, the operability and the visibility. This navigation system is provided with a destination setting screen to be used for setting the route, a route searching screen for displaying the searched route, a route information screen for displaying the searched route information, and a route guiding screen to be opened for the guide automatically or according to the will of the driver. The display screen after the guide is started includes a section map for guiding a wide area over route - set several sections including that section of the entire route which is being followed, and an intersection map for guiding at intersections.

Some navigation system further has further functions to provide information of the remaining distance, the name and the turning direction of the intersection, at which the vehicle should turn, so as to follow the route without fail, to teach distinguishing marks so as to confirm the route being followed, to make the guidance not only through the display but also in speeches.

In order to set a route in such navigation system, it is necessary to input a starting point and a destination. If the starting point and the destination are determined by the inputting, a route searching is processed from the peripheries of the departing point and the destination and the route information data between them so that an optimum route is deter mined from a plurality of routes. When this route search is ended, there is opened an entire route map which is displayed with the present position, the destination and the route inbetween. The route guide is started by grasping the summary of the route from that entire route map.

In some of the navigation systems having such route guiding functions, the names of the entrance and exit of an expressway to be used at first are exclusively displayed as the essential points of the route in the entire route display after the route search has been ended, as proposed by us in Japanese Patent Application No. 220111/1992. As disclosed in Japanese Patent Laid - Open No. 4285/1990, on the other hand, the peripheral maps are displayed by a single - action scrolling or by switching the scales of the map.

In the route guide systems of the prior art, however, when it is desired to know in advance the detailed route information as a summary of the route such as the roads and branching points on the route, the route direction or shapes at the branching points or the essential points of the route, the routes in the periphery of the destination, or the guide ending position, or when the information of the route in the front of the present position is desired during the guide, the route is searched by switching the map scales or by the single action scrolling operation from the screen after the route guide has started. These operations are not easy but take a long time.

US-A-4 757 455 discloses a navigation system for a vehicle. The system comprises an input means which allows entry of data required for the guide display such as the starting point and the destination. Map data calculating means reads the map data for a pre-selected district from the map data storage means, executes a course search for the vehicle path to the destination on the basis of the data for roads between the start point and the destination, and displays a road map image on display means. Furthermore, when a manual reset is received during the guide display, the map data calculating means carries out a correction process which corrects the present position data of the vehicle. Display control means displays a road map set up by the map data calculating means. Display switching means checks to see if the vehicle is entering a freeway by checking whether or not the present position of the vehicle coincides with a road for which the freeway flag is set to indicate that the road the vehicle is entering is a freeway. If so, display switching means outputs a switch command which orders the display control means to change from the road map to a text road-name display displaying the names of the freeways along which the vehicle will travel.

EP-A3-0 355 232 relates to a road drawing system for a navigation apparatus. The road drawing system for a navigation apparatus is adapted to output guidance information relating to a previously set course. The drawing system comprises a display device for displaying roads connected to a given route and intersections, road data indicating the relationship between roads and intersections, and map data for storing positional information on roads in the form of a multitude of coordinates. In the road drawing system for a navigation apparatus of this invention, the coordinates indicating the position of a road to be displayed are read out from the road data and the map data, and the coordinates thus read out are turned, contracted or enlarged, and transformed into coordinates of the set drawing area of the display means.

From US-A-4 737 927 a map display apparatus is known. A map display apparatus displays a road map of a desired display district in accordance with stored map data. The apparatus includes a map data storing medium storing, in correspondence to a plurality of basic sections forming the whole area of the road map, a plurality of map information representing the road configurations in the basic sections and a plurality of name information representing the names of various parts in the basic sections, a display selecting device for selecting the desired display district from the whole area of the road map, a display control unit for generating a display signal in accordance with the map information group and the name information group of the basic sections contained in the selected display district, and a display responsive to the display signal to display the selected display district.

DE-A1-41 18 606 discloses a system and device for navigation of vehicles comprising a display unit for displaying road information. A road information can be displayed selectively in accordance with the present position of the vehicle and/or, if desired by the driver, on the basis of a plurality of road information.

An object of the present invention is to provide a navigation system which can access the branching points on a route, the essential positions on the route or the detailed maps in the peripheral of the essential positions from a route information screen after the route search.

The object is achieved by the features of the claims.
Fig. 1 is a block diagram showing a hardware construction for realizing the route information displaying function of a navigation system according to the present invention ;
Fig. 2 is a block diagram showing one embodiment of the system construction of the navigation system according to the present invention;
Fig. 3 is a diagram showing one example of a data structure for displaying route information ;
Fig. 4 is a diagram for explaining the route information ;
Fig. 5 is a diagram for explaining a specific example of a route guide ;
Fig. 6 is a diagram for explaining a specific example of the route information ;
Figs. 7 (a) to 7 (c) are diagrams showing transitions of the route information for explaining the screen operations ;
Fig. 8 is a diagram showing another example of a display mode of the route information screen in case the present position is out of route ;
Fig. 9 is a diagram showing another example of the display mode of the route information screen in case indications of the front are displayed in a branching point mark on the route :
Fig. 10 is a diagram showing another example of the display mode of the route information screen in case what direction the entry should be made in at an expressway branching point ;
Fig. 11 is a diagram showing another example of the display mode of the route information screen in case the display is made from a destination ;
Fig. 12 is a diagram showing an example of the screen in which is displayed a peripheral map operated in the route information screen ;
Fig. 13 is a diagram showing an example of the screen in which the front is always displayed upward of the peripheral map operated in the route information screen ;
Fig. 14 is a diagram showing an example of the intersection map as the peripheral map operated in the route information screen ;
Fig. 15 is a flow chart showing a procedure for processing the route information on the route information screen ;
Fig. 16 is a flow chart showing a procedure for processing one road in a road number string in the procedure of Fig. 15 ;
Fig. 17 is a flow chart showing another procedure for one road in the road number string ;
Fig. 18 is a diagram showing an example of the display of a list including prefectural road attributes ;
Fig. 19 is a flow chart showing the flow of a displaying procedure from the "present position", in which the vehicle is at present, to the "destination" of the final position in case road names are exclusively displayed :
Fig. 20 is a flow chart showing the flow of a displaying procedure of one road in the road number string in the displaying procedure of Fig. 19 ;
Fig. 21 is a diagram showing a display example in case the road attributes are not displayed ;
Fig. 22 is a diagram showing an example of the display in case the road names are displayed for national roads or expressways whereas the road attributes are displayed for ordinary roads ;
Fig. 23 is a flow chart showing a procedure of one road in the roar number string in case the names of roads higher than national roads are exclusively displayed ;
Fig. 24 is a diagram showing an example of the display of Fig. 23 :
Figs. 25 (a) to 25 (c) are diagrams showing examples of the construction of a route information setting screen, which is owned by a system having a function to select the display levels of the route information, and the transitions of the screen ;
Fig. 26 is a flow chart showing the flow of the displaying procedure of the route information having the display level selecting function :
Fig. 27 is a flow chart subsequent to that of Fig. 26 ;
Fig. 28 is a flow chart showing the procedure of one road in the road number string of Fig. 27 : and
Fig. 29 is a flow chart subsequent to that of Fig. 28.

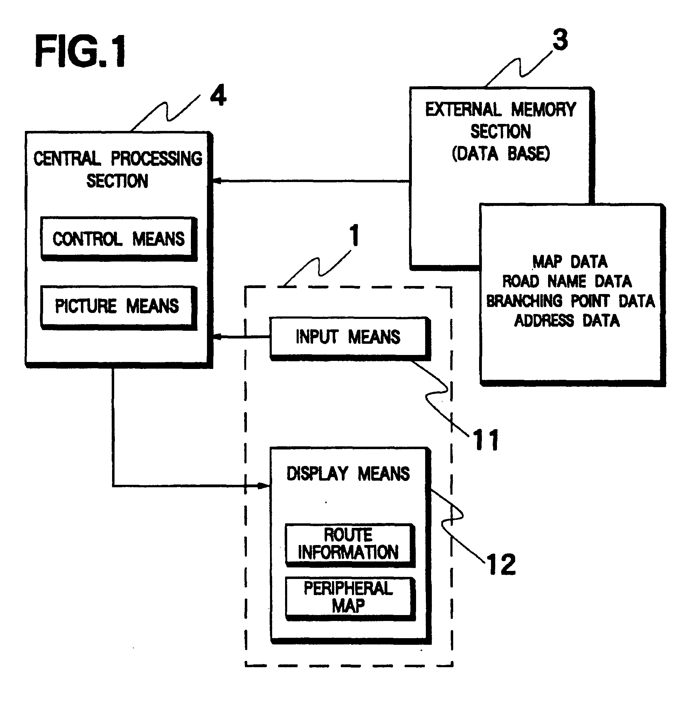

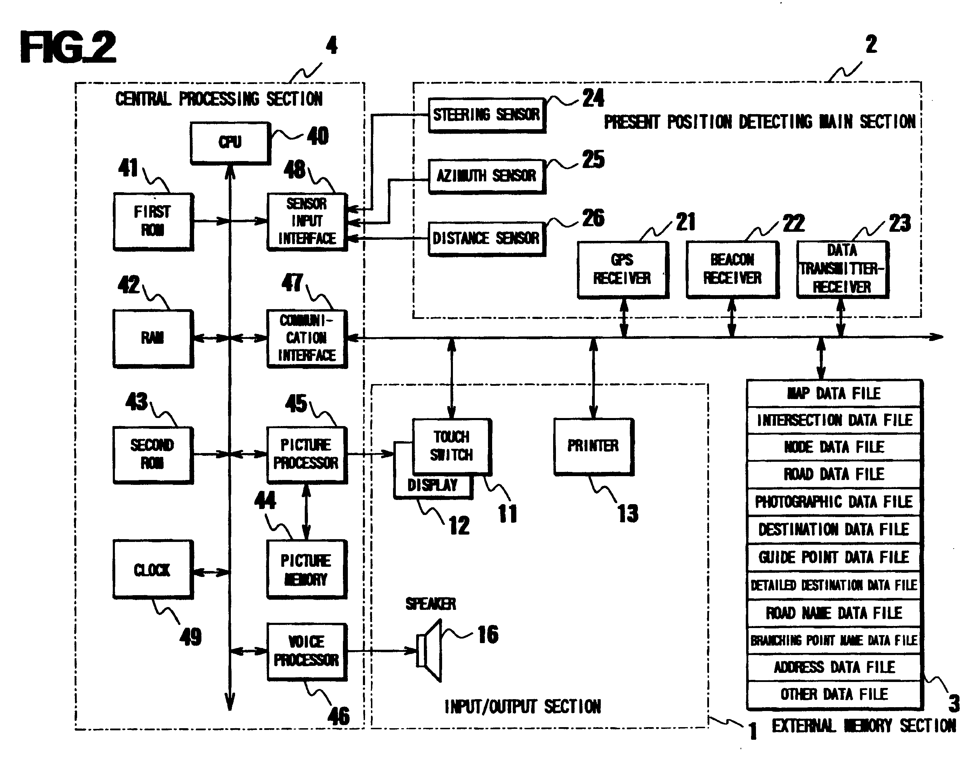

An embodiment of the present invention will be described in the following with reference to the accompanying drawings. Fig. 1 is a block diagram showing a hardware construction for realizing the route information displaying function of a navigation system according to the present invention. Fig. 2 is a block diagram showing one embodiment of the system construction of the navigation system according to the present invention.

The navigation system is constructed to comprise : an input/ output section 1 for inputting/outputting the information concerning a route guide : a present position detecting section 2 for detecting the information concerning on the present position of the vehicle of a driver; an external information memory section 3 stored with navigation data necessary for computing a route and display guide data necessary for guidances ; and a central control section 4 for executing a route searching procedure and a displaying procedure necessary for guiding the route and for controlling the entire system.

In order to input a destination and to inform the driver of the guide information, if necessary, by the speech and/or in the screen, the input/output section 1 is given functions to instruct the central control section 4 a navigation processing according to the will of the user and to output the processed data and the communication data to a printer, to a speaker for speeches and to a display for graphic indications. As the input means for realizing these functions, there is assembled in a display 12 a touch switch 11 for inputting a destination in terms of its address, telephone number and/or coordinates and for requesting a route guide. On the other hand, the output means includes : a display 14 for displaying the route guide automatically in the screen a printer 13 for printing the data processed by the central control section 4 and /or the data stored in the external information storage section 3 ; and a speaker 16 for outputting the route guide in the speech.

Here can be added a speech recognition device for inputting a speech and/or a magnetic card reader for reading the data recorded in an IC card or a magnetic card. There can also be added a data communications system for transferring data with an information source such as the information center for storing the data necessary for the navigation to serve them upon the request of a user through communications lines or an electronic note stored in advance with data intrinsic to the user such as map data or destination data.

The display 12 is constructed of a color CRT and a color liquid crystal display for displaying in colors not only all the screens necessary for the navigation such as a destination setting screen, a route guiding screen, a section map screen or an intersection map screen based upon the map data or guide data processed by the central control section 4 but also buttons in the screen for setting the route guide, for guiding the route and for switching the screens. The route guide screen is composed of at least the screens for displaying the entire route map, the route information and the peripheral maps. The display 12 is further provided with the touch panel 11 corresponding to the display of the function buttons so that the aforementioned operations may be executed on the basis of the signals inputted by touching the buttons. These buttons and touch panel 11 constitute the input means, the detailed description of which is omitted from here.

The present position detecting section 2 is composed of: a GPS receiver 21 utilizing the global positioning system (GPS) ; a beacon receiver 22; a data transmitter - receiver 23 for receiving the corrected signals of the GPS utilizing the cellular phone or the FM multiplex signals; a steering angle sensor 24 made of a wheel sensor or a steering sensor ; an azimuth sensor 25 made of an earth magnetism sensor ; and a distance sensor 26 for detecting the mileage from the number of revolutions of the wheels.

The external memory section 3 is a data base which is stored with all the data necessary for the route guide that include maps, intersections, nodes, roads, branching points, photographs, destinations, guide points, detailed destinations, road names, branching points, graphic guides and speech guides. This data base is stored with a road name data file and a branching point name data file relating to the map data file, especially as the route information necessary for practicing the present invention.

The central control section 4 is composed of : a CPU 40 for executing the arithmetic operations : a first ROM 41 stored with not only programs for processing the route searches and the programs for controlling the displays necessary for the route guide and the speech output necessary for the speech guide but also the data necessary for the programs : a RAM 42 for temporarily latching the searched route guide information and the data being arithmetically operated ; a second ROM 43 stored with the display information data necessary for the route guide and the map display ; an picture memory 44 stored with the picture data to be used for the screen displays ; an picture processor 45 for fetching the picture data from the picture memory on the basis of the display control signal from the CPU to process the picture data graphically and output them to the display ; a voice processor 46 for synthesizing and converting the speech, the phrase, the single sentence and the voice read out of the external information memory section 3 on the basis of the speed output control signal of the CPU, into analog signals to output these analog signals to the speaker; a communications interface 47 for transferring the input / output data through communications ; an input interface 48 for fetching the sensor signal of the present position detector ; and a clock 49 for entries of date and time into the internal dialogue information.

The present system is so constructed that the route guide can be selected from the screen display or the speech output by the driver.

In the present system, on the other hand, the present position is determined by calculating a supposed position on the basis of the various sensor signals from the present position detector and the GPS data and by determining the position on the road from the correlation among the supposed position, the road on the map and the GPS data.

Moreover, the present system is given a function to decide whether or not the present position is approaching a guide point predetermined with respect to the position on the line of the vehicle, in view of the path to the destination. Specifically, there are decided by the above - specified function the timings for the automatic speed outputting of the predetermined distance on this side of the intersection on the guide route or the decision after passage of the intersection, and for the display outputting of the intersection information such as the name of intersection passed. On the basis of this decision, the present system instructs the picture processor and the voice processor to perform the guiding operations. In response to the request signal, on the other hand, the present system instructs the voice processor to perform the speech guide of the present position.

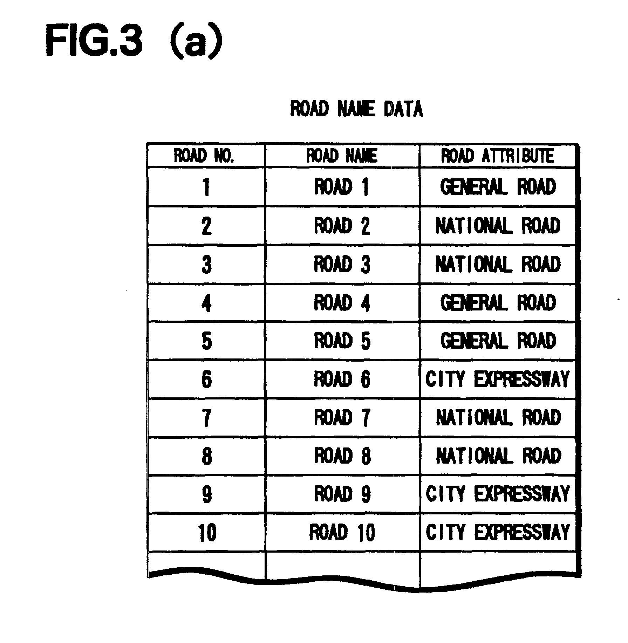

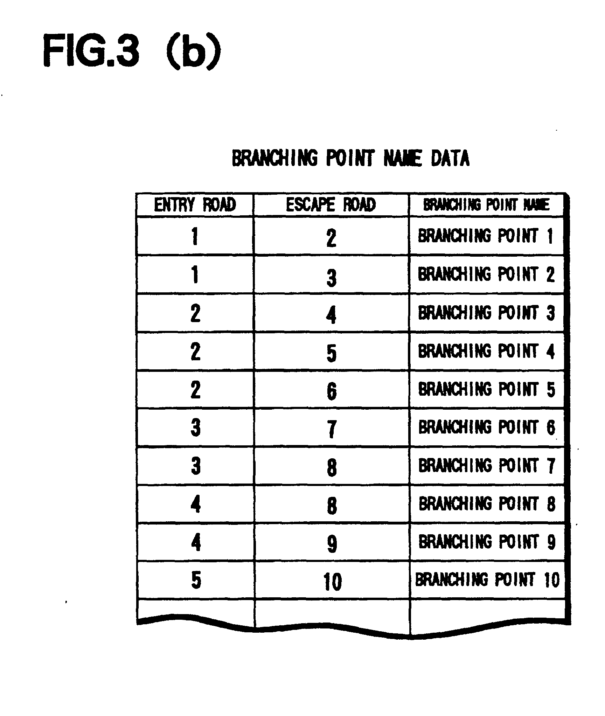

Here will be described the route information displaying function. The data to be used for the route information are the map data, the road name data and the branching point name data. Fig. 3 (a) shows a structure of the road name data of the data concerning the route information, and Fig. 3 (b) shows a data structure of the branching point data. The road name data are related by the road number, the road name and the road attribute, and the branching point name data are related by the entry road, the escape road and the branching point name. The road number is so given to each road that it may be used by the present navigation system. The road attribute is a road classification expressed in the map as a national road, a prefectural road or an expressway. The entry road indicates the number of the road which is entered when the drive route is changed from a road on the route to another. The escape road indicates the number of the road which is entered when the drive route is changed from a road on the route to another. The branching point name indicates the name of a branching point between the entry road and the escape road.

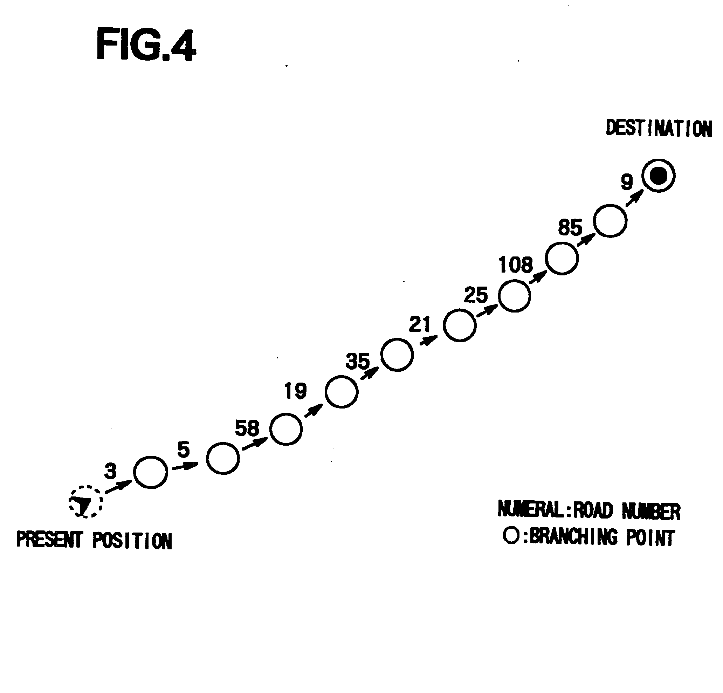

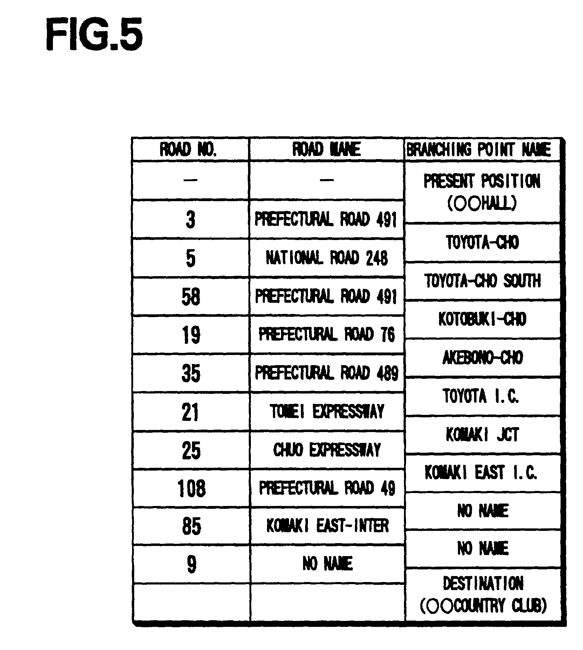

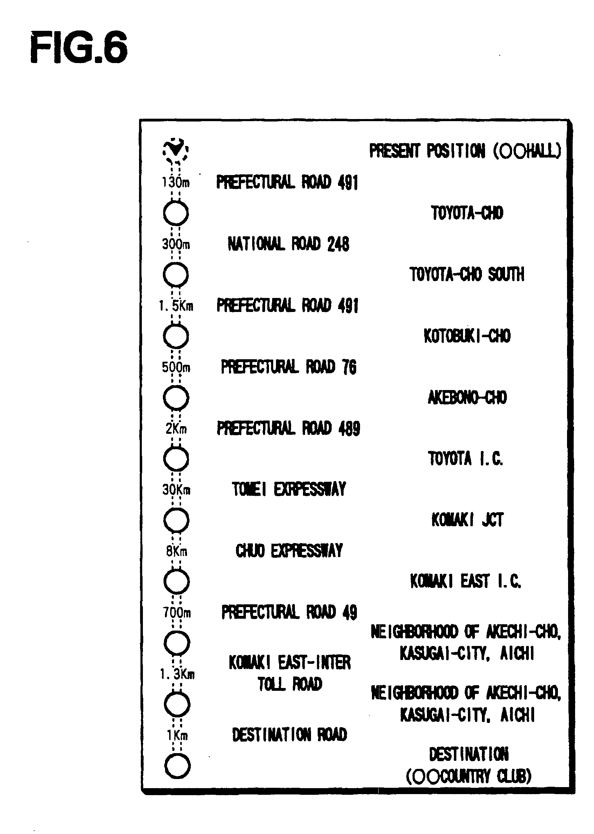

A specific example of the route guide will be described with reference to Figs. 4 to 6. Fig. 4 shows a specific example of the route guide according to the route displaying function. Fig. 5 shows the relations among the road number, the road name and the branching point name in the specific example. Fig. 6 shows an example of the screen displaying the processed route information. Incidentally, it is assumed that the present position of the specific example of the route guide shown in Fig. 4 is " OO Hall" and that the destination is " OO Country Club". In Fig. 4, the route from the present position to the destination has ten roads and nine branching points. These roads and branching points are related by the road numbers, the road names and the branching point names, as shown in Fig. 5.

As shown in Fig. 6, the route information map indicates not only the distances between the branching points (as indicated by circles) on the routes from the present position to the destination but also the names of the roads and branching points used in this route, in connection with the route. This example is indicated on the basis of the data shown in Fig. 5.

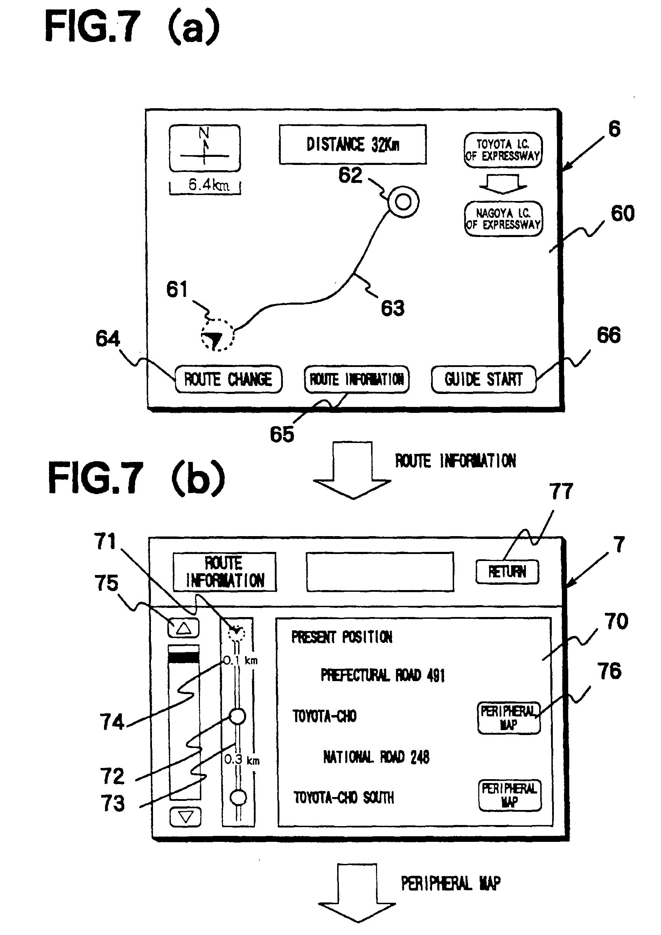

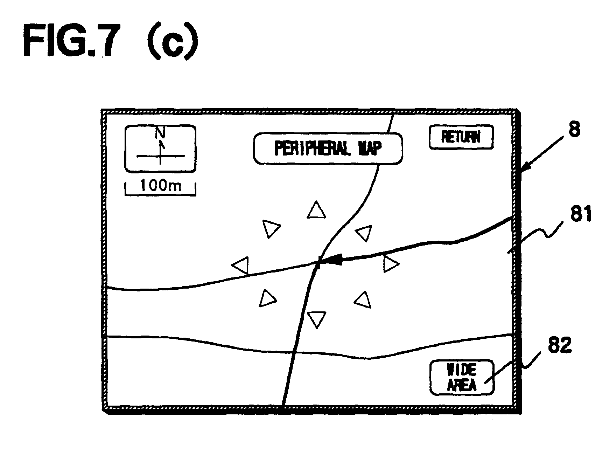

Here will be described the screen for operating the route information. Figs. 7 (a) to 7 (c) indicates the searched route on the entire route map screens and shows the screen transitions for acquiring the route information from these screens. The entire route map screen, as designated at 6 in Fig. 7 (a), is formed with a map display panel 60 in which is displayed a running route 63 from the present position of the vehicle, as indicated by a present position mark 61 of the wide area map, to the destination as indicated by a destination mark 62. The map display panel 60 is provided as input means with : a route change key 64 for changing the entire route indicated, namely, for indicating a re - search ; a route information key 65 for indicating an essential portion of the guide on the route ; and a guide start key 66 for indicating the navigation on the displayed route.

A route information screen 7 shown in Fig. 7 (b) is opened by pushing the route information key 65 in the entire route map screen 6 of Fig. 7 (a), to list up the road name and the branching point name on the route from the present position. For the route display, a branching point mark 72 is indicated between a present position mark 71 to the destination mark, and a road is indicated at 73 by parallel lines together with distances 74 inbetween. As an example of the display on this route. it is guided in Fig. 7 (b) that the distance from the present position mark to tne next branching point mark is "0.1 Km" and that the distance from this branching point to the next branching point is "0.3 Km".

This screen is provided with a route information display panel 70 for scrolling the route information by opening a scroll key 75. This screen is provided as the input means with a peripheral map key 76 which is so positioned in each essential portion on the route as to access the map of the peripheral portion of the branching point. If a return key 77 is pushed in this screen, the entire route map screen 6 is restored. If the peripheral map key 76 is pushed, on the other hand, a screen 8 (as shown in Fig. 7 (c)) of the detailed peripheral map is opened.

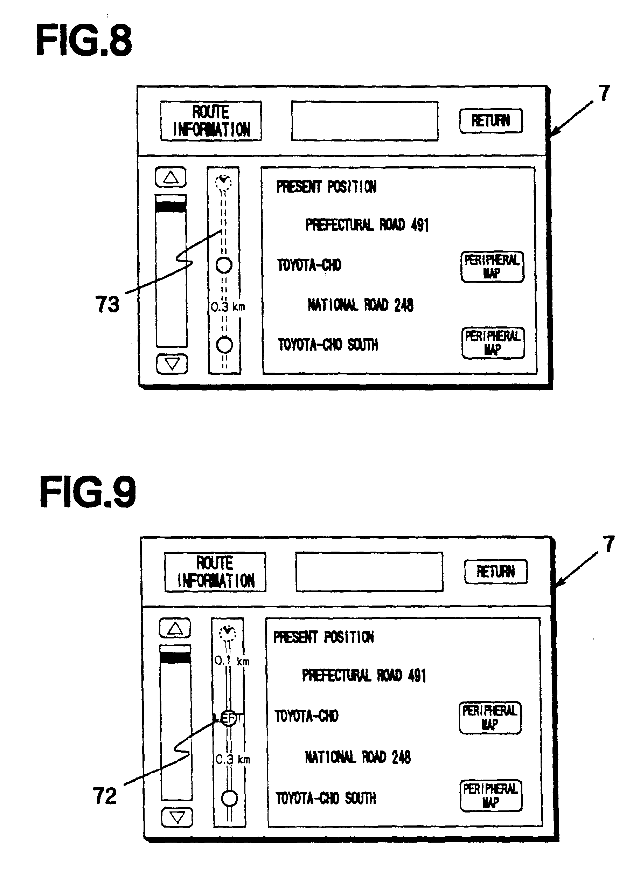

The road of the route information display panel 70 draws different roads in case the present position is or is not on the route. In the present example, the road from the present position to the branching point, between the branching points or from the branching point to the destination is drawn by solid lines, as shown in Fig. 7 (b), in case the present position is on the route. In case the present position is not on the route, on the contrary, the road indication 73 between the branching points is drawn by broken lines, as shown in Fig. 8.

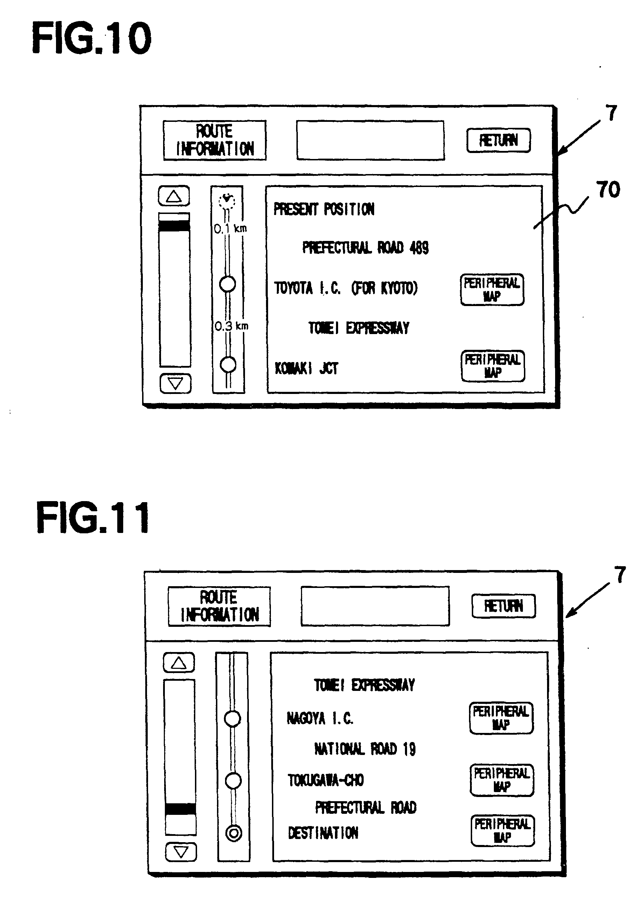

Another embodiment of the route information display will be described in the following. Fig. 9 displays the forward direction at the branching point in the branching point mark 72 on the route. As shown, the left - turn is guided at Toyota - Cho or the branching point, and the right - turn is guided at Toyota - Cho South. Fig. 10 displays a direction 78 indicating which direction is to be taken at the expressway junction displayed in the route information display panel 70. For example, "Toyota I.C. (for Kyoto)" is displayed for the guide in case the course is taken at Toyota I.C. for Kyoto, as shown.

In the route information screen, the indication is started from the starting point but may be started from the destination or another point, as shown in Fig. 11.

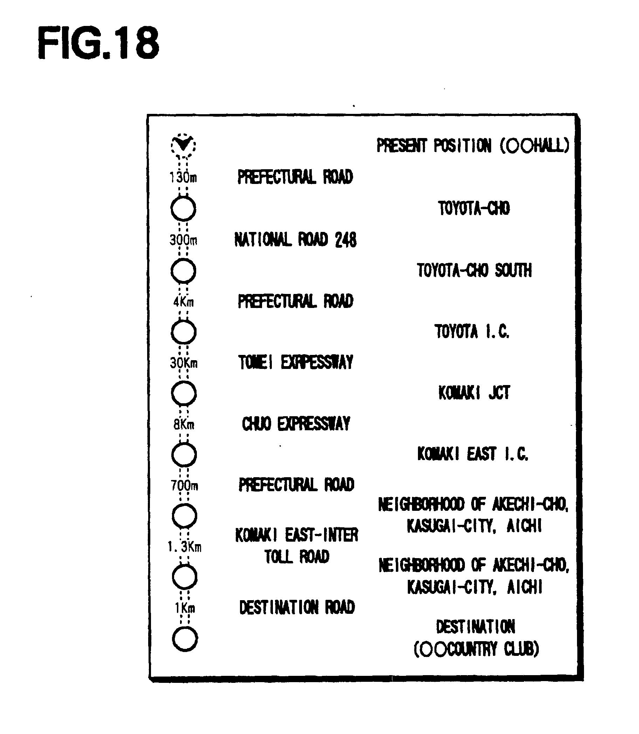

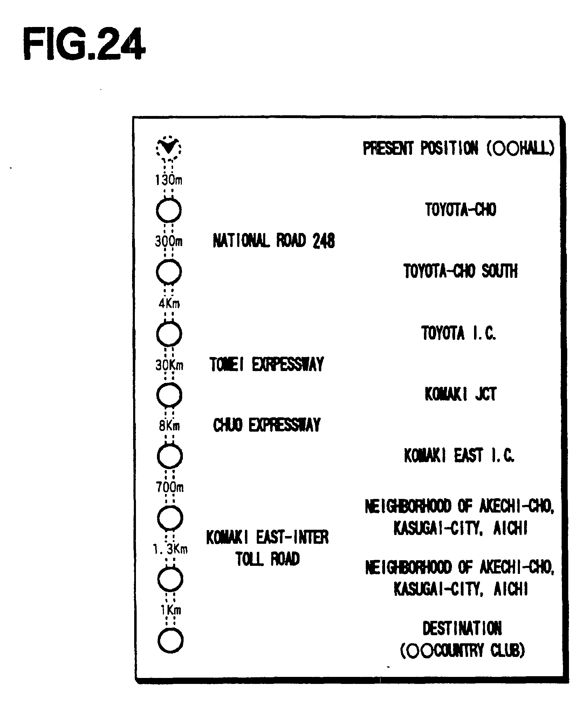

Moreover, all the roads are displayed independently of their classifications. For example, as shown in Fig. 6, there are indicated the national roads or higher, such as National Road 248, Tomei Expressway or Chuo Expressway. In the case of ordinary roads such as prefectural roads, the attributes may be indicated, as in Fig. 18, or no attribute is indicated, as in Fig. 24. In order to facilitate searches of the roads in the list displayed in the route information screen, moreover, the roads can be indicated in such different colors that the expressways are indicated in blue whereas the national roads are indicated in red, for example. Still moreover, the distances between the branching points are indicated but may be omitted.

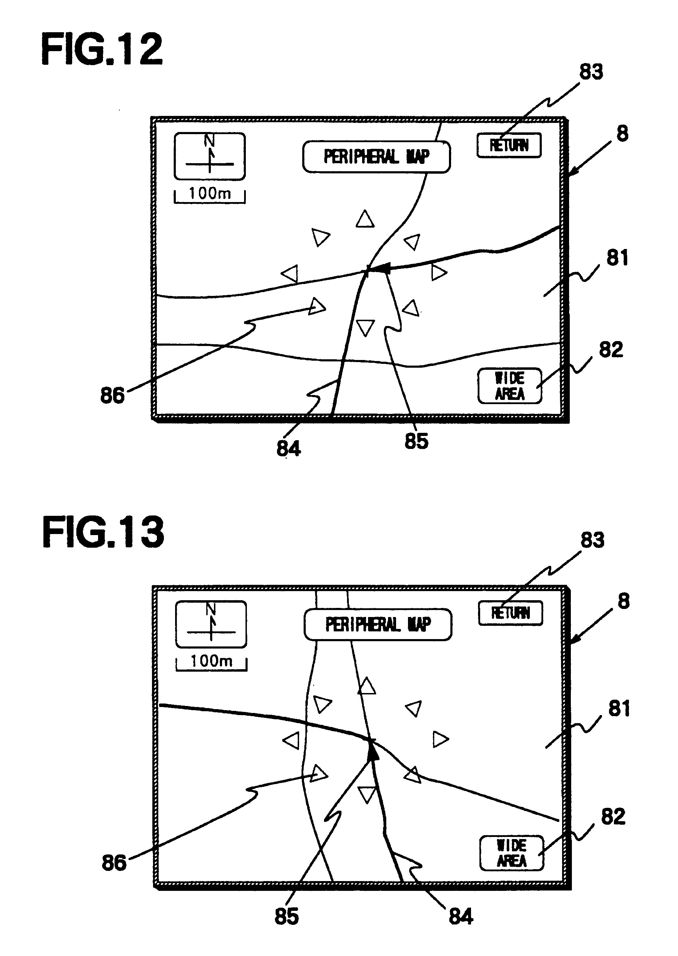

The peripheral map screen 8 is provided, as shown in Fig. 12, with a peripheral map indication panel 81 for indicating the peripheral map of an essential portion on the route pushed by the route information screen 6. This panel is drawn by such a section map that an intersection is positioned at its central portion to indicate a searched route 84 and a forward direction 85 and that the north or south is directed upward (or downward). From this screen, it is possible to acquire the detail of the essential point of the route such as the route direction and shape of the branching point. At the center of the screen, on the other hand, there are arranged around the intersection a set of cursors 86, one of which can be touched to scroll the map in the direction indicated. The peripheral map screen is further equipped with a wide area key 82 for enlarging the essential portion of the selected route to a wide area. If a return key 83 is pushed, the previous screen or the route information screen 7 is restored.

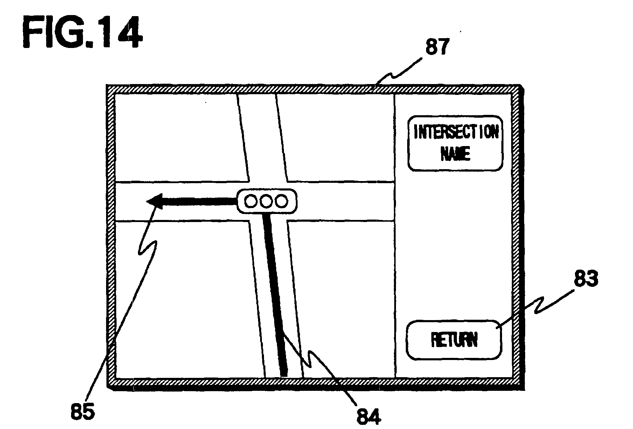

In the above - specified embodiment of the peripheral map display, the so - called "north head display", in which the map is displayed with its north directed upward, is made. As shown in Fig. 13, however, the display can be modified to the so - called "heading - up display", in which the forward direction is always directed upward. Moreover, the peripheral map may be further modified to display the intersection diagram, as shown in Fig. 14. The peripheral map or the intersection map may be hemmed in different colors, as indicated at 87 in the intersection map of Fig. 14, so that it may be easily discriminated.

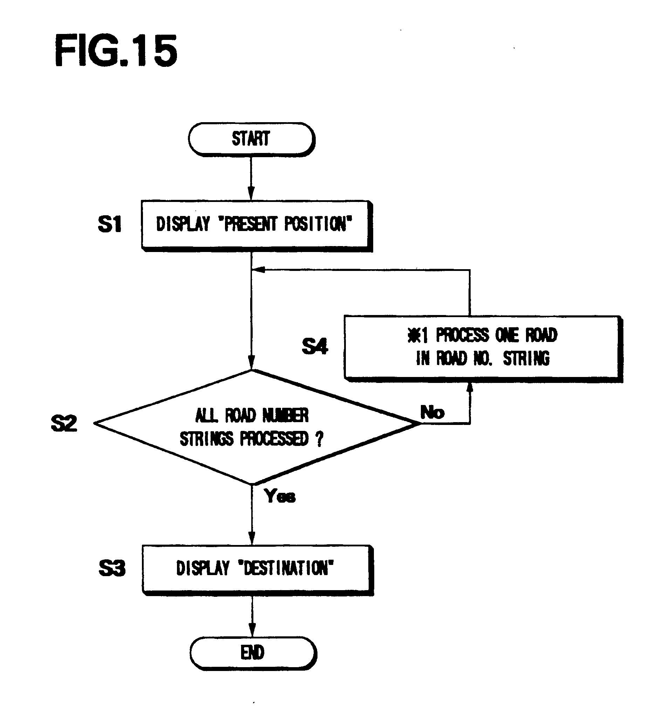

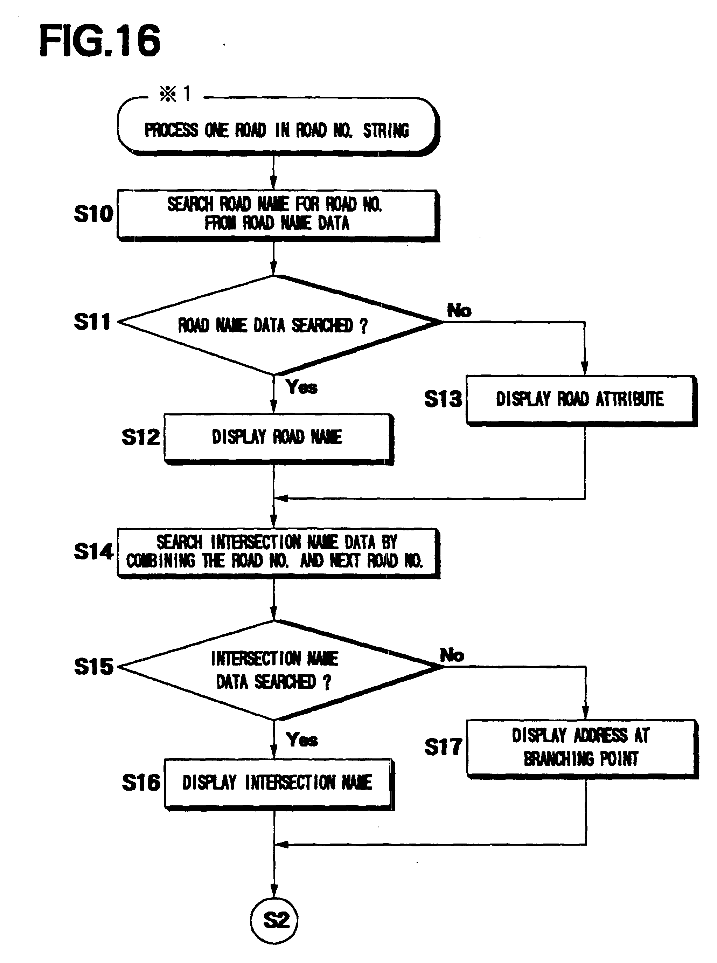

Here will be described the procedure for processing the route information display. Fig. 15 is a flow chart showing the processing procedure of the display from the "present position", in which the vehicle is at present, to the "destination" or the final point. If the processing of all the road number strings on the route has been finished by the route search, the "present position" is displayed (at S1) first of all. After this, it is decided (at S2) whether or not the processing has been finished for all the road number strings. If the answer is YES, the " destination" is displayed (at S3). If the answer is NO, on the contrary, one road in the road number string is processed (at S4). Fig. 16 is a flow chart showing the procedure of processing the display of one road in the road number string. First of all, the road name for the road number is searched (at S10) from the road name data (as shown in Fig. 3). It is then decided (at S11) whether or not the road name is searched. If the answer is YES, the road name is displayed (at S12). If the answer is NO, on the contrary, the road attribute is displayed (at S13). If this display processing is ended, it is decided (at S15) whether or not the intersection name data is searched. If the answer is YES, the intersection name is displayed (at S16). If the answer is NO, on the contrary, the address at the branching point is displayed (at S17). When a series of these display processings are ended, the routine is returned to the step S2 of Fig. 15.

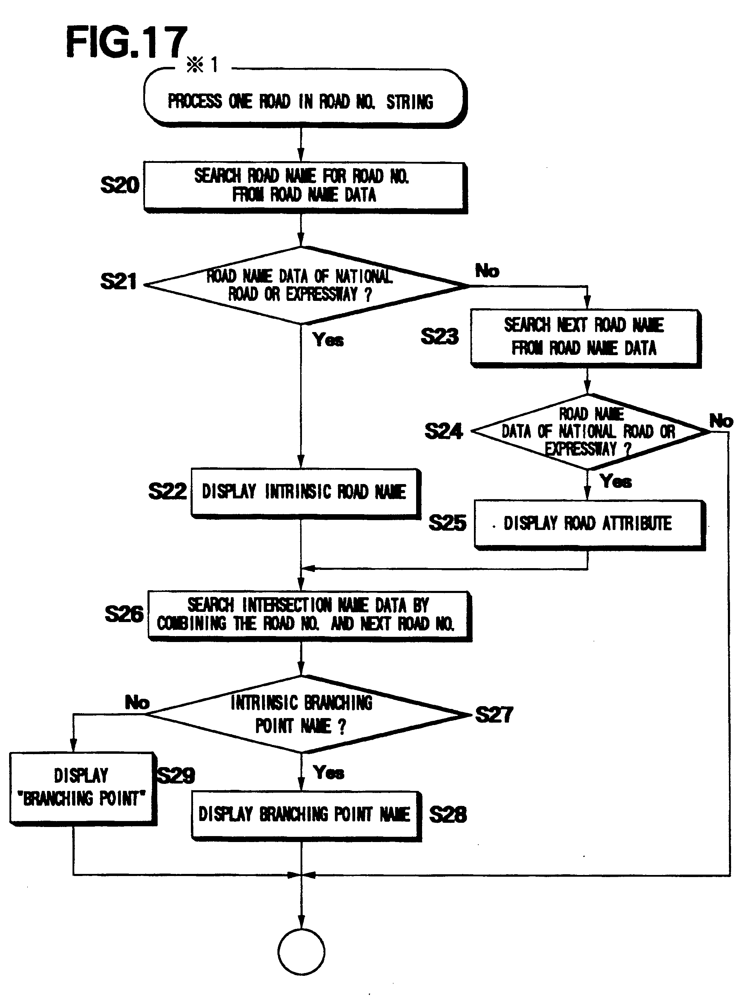

Another embodiment of the procedure for processing one road in the road number string will be described with reference to Fig. 17. Fig. 18 shows a specific example, in which the name of a road is displayed for the national road or higher whereas the attribute of a road is displayed for the ordinary road such as the prefectural road. First of all, the road name for the road number is searched (at S20) from the road name data (as shown in Fig. 3). It is then decided (at S21) whether or not the road name is of a national road or an expressway. If the answer is YES, an intrinsic road name is displayed (at S22). If the answer is NO, a next road name is searched (at S23) from the road name data. It is decided again (at S24) whether or not the road name is of a national road or an expressway. The road attribute is displayed (at S25), if the answer is YES, and the routine is otherwise returned to the step S2 of Fig. 15.

When the displaying operations of the intrinsic road name and the road attribute are ended at the steps S22 and S25, the branching point name data is searched (at S26) by combining the road number and a next road number. Next, it is decided (at S27) whether or not an intrinsic branching point name is searched. If the answer is YES, the branching point name is displayed (at S28). If the answer is NO, the "branching point" is displayed (at S29). In place of this display of the branching point, an address can be displayed. After a series of these displaying operations, the routine is returned to the step S2 of Fig. 15.

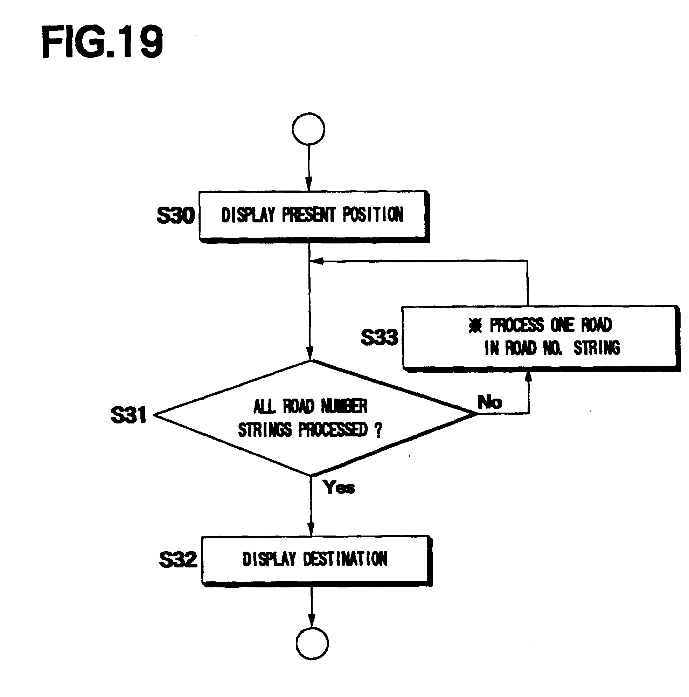

Here will be described an embodiment of the case in which the road name is exclusively displayed. Fig. 19 is a flow chart of the procedure for processing the displays from the "present position", in which the vehicle is present, to the final point or the "destination". When the processing of all the road number strings on the route is ended by the route searches, the "present position" is displayed (at S30) first of all. It is then decided (at S31) whether or not the processing has been finished for all the road number strings. If the answer is YES, the "destination " is displayed (at S32). If the answer is NO, on the contrary, one road in the road number string is processed (at S33).

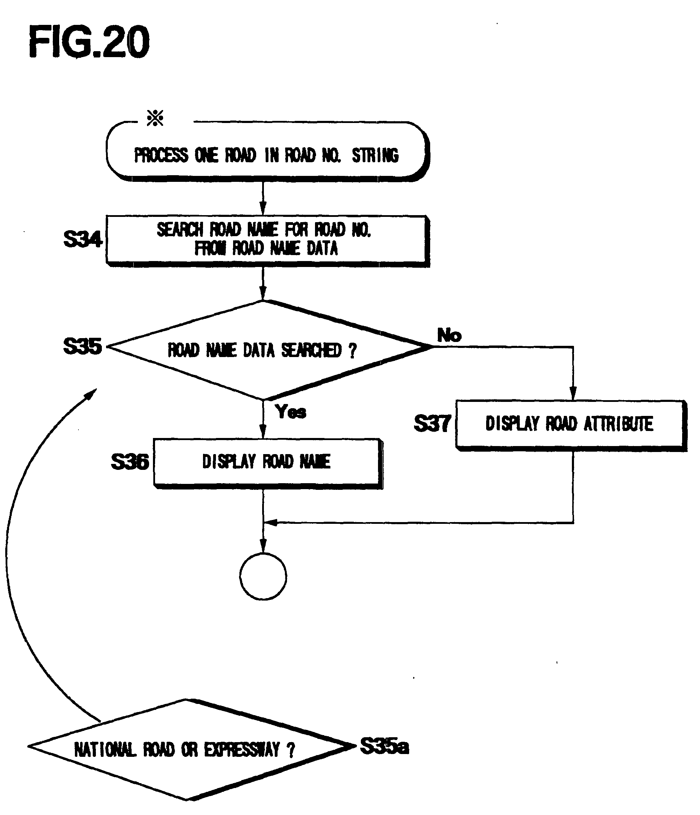

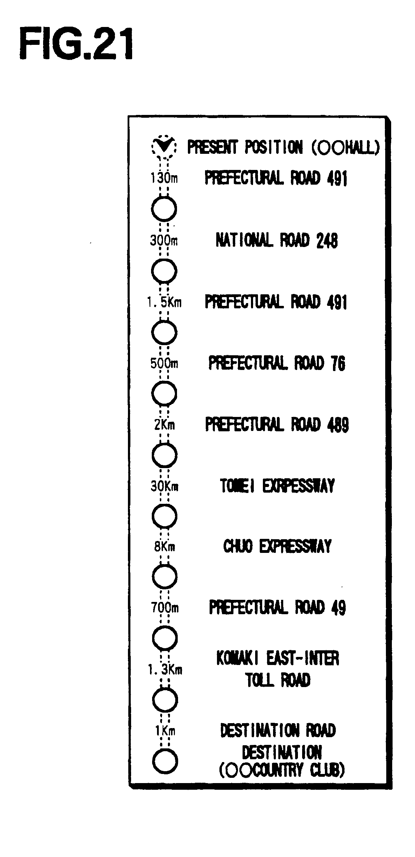

Fig. 20 is a flow chart showing the procedure for processing the display of one road in the road number string. First of all, the road name for the road number is searched (at S34) from the road name data (as shown in Fig. 3). It is then decided (at S35) whether or not the road name data is searched. If the answer is YES, the road name is displayed (at S36). If the answer is NO, the routine advances to the processing of a next road number. In short, the road attribute is not displayed, but the routine is returned to the step S31. A specific example of this case is shown in Fig. 21.

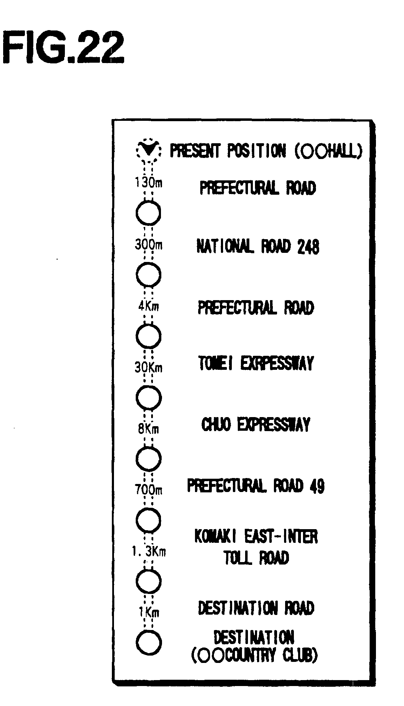

In place of the decision at the step S35 of Fig. 20 on whether or not the road name data is searched, it is decided (at S35a) whether or not the road is of the national way or the expressway. If the answer is YES, the road name is displayed, but the road attribute is otherwise displayed. A specific example of this case is shown in Fig. 22. In the absence of the road name, on the contrary, the road attribute is displayed. After this displaying procedure, it is decided (at S15) whether or not the intersection name data is searched. If the answer is YES, the intersection name is displayed (at S16). If the answer is NO, on the contrary, the address of the branching point is displayed (at S17). After a series of these operations, the routine is returned to the step S2 of Fig. 15.

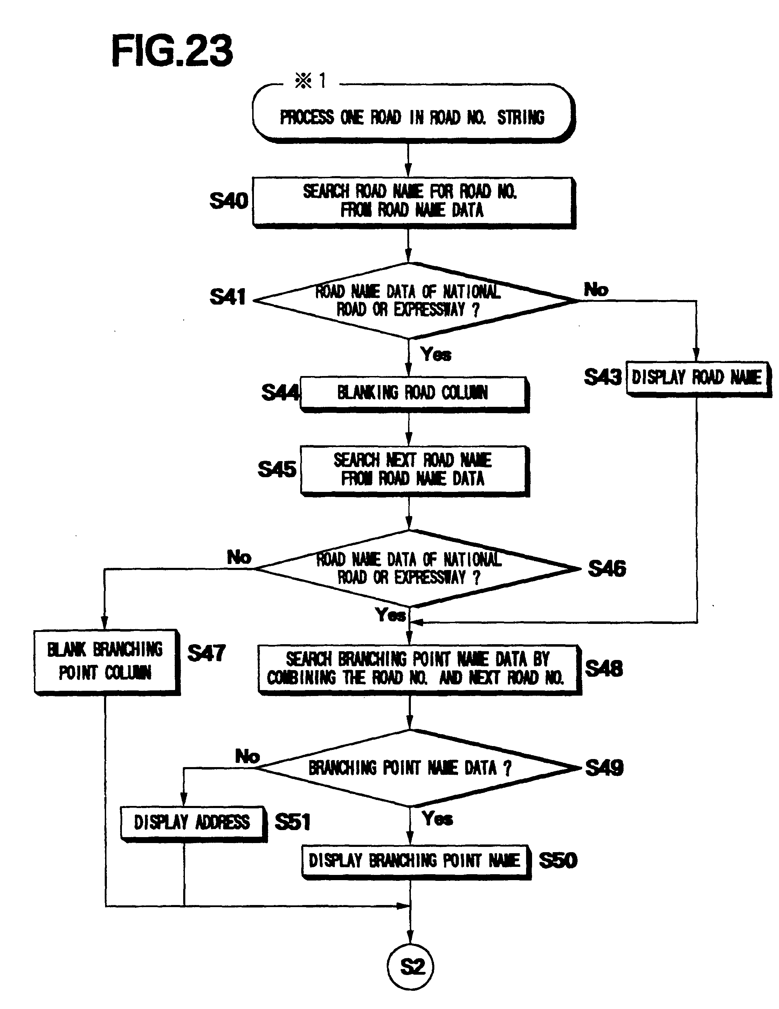

Another example of the procedure for one road in the road number string will be described with reference to Fig. 23. Fig. 24 shows a specific example of the display of only the names of national roads or higher. First of all, the road name for the road number Is searched (at S40) from the road name data (as shown in Fig. 3). It is then decided (S41) whether or not the road name is of the national road or the expressway. If the answer is YES, the road name is displayed (at S43). If the answer is NO, on the contrary, the road column between the branching points is blanked (at S44), and a next road name is searched (at S45) from the road name data. It is then decided (at S46) whether or not the road name is of the national road or the expressway. If the answer is NO, the name column of the branching point is blanked (at S47), and the routine is returned to the step S2 of Fig. 15. If the road name is of the national road or the expressway or after the step S43 at which the road name is displayed, the intersection name data is searched (at S48) by combining the road number and the next road number.' From this result, it is decided (at S49) whether or not the intersection name data is searched. If the answer is YES, the intersection name is displayed (at S50), but otherwise the address of the branching point is displayed (at S51).

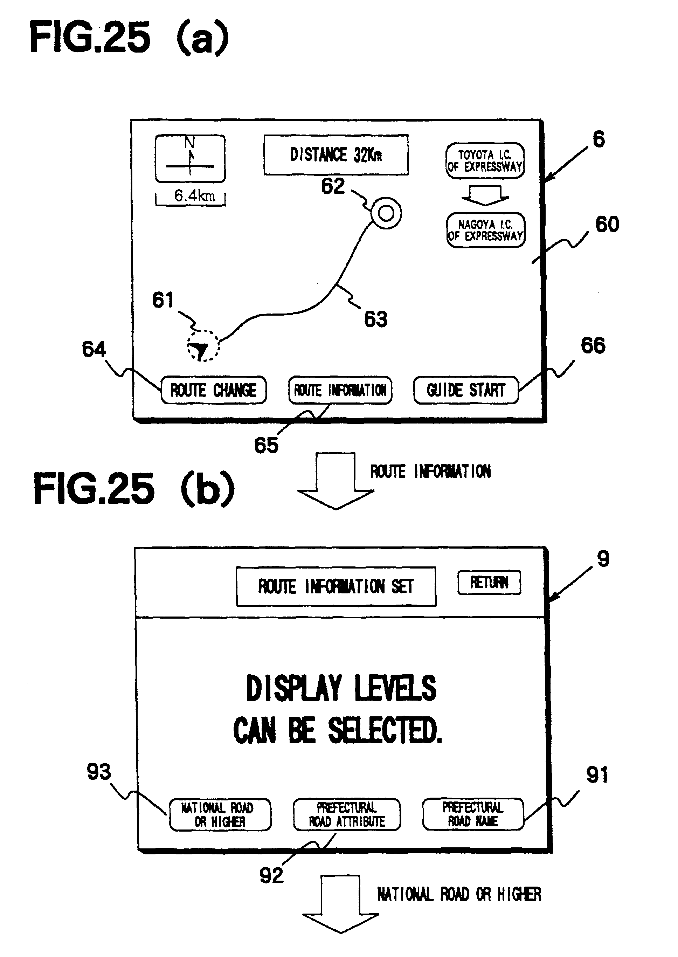

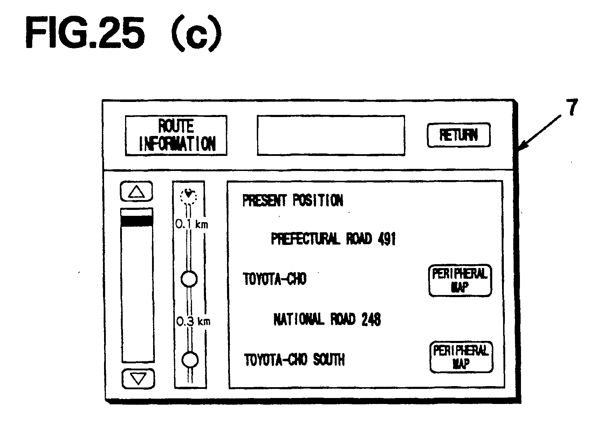

Here will be described a system having a function to select the display levels of the route information. Figs. 25 (a) to 25 (c) show the screens of the entire map of the searched route and the screen transitions for selecting the display levels of the route information from those screens. The present embodiment is characterized by having route information setting screens for displaying the route information by the national road or higher, by the prefectural road at tribute or by the prefectural road name. Incidentally, the entire route screen display, as shown in Fig. 25 (a), and the route information screen display, as shown in Fig. 25 (c), are identical to those of Fig. 7. Thus, here will be described only a route information setting display 9, as shown in Fig. 25 (b), and the description of the remainder will be suitably omitted.

When the route information button 65 is pushed in the entire route map display 6 shown in Fig. 25 (a), there is opened the route information setting screen 9 (as shown in Fig. 25 (b)) for selecting the display levels of the route information. In this route information setting screen 9, there is displayed a message "Display Levels Can Be Selected," for indicating a selection of which level the route information is to be listed at. In this embodiment, the display level selecting button is provided to select the levels of display of all the road names, as shown in Fig. 6, the prefectural road attribute, as shown in Fig. 18, and national road or higher, as shown in Fig. 24. Specifically, the display level selecting button is composed of a prefectural road name button 91 for displaying the list of Fig. 6, a prefectural road attribute button 92 for displaying the list of Fig. 18, and a na tional road or higher button 93 for displaying the list of Fig. 24. If this national road or higher button 93 is pushed, as shown, the road from the present position to the branching point "Toyota - Cho" is blank because it does not belong to the national road or higher, but the next road from "Toyota - Cho" to "Toyota - Cho South" is displayed to have its name "National Road 248" because it belongs to national.

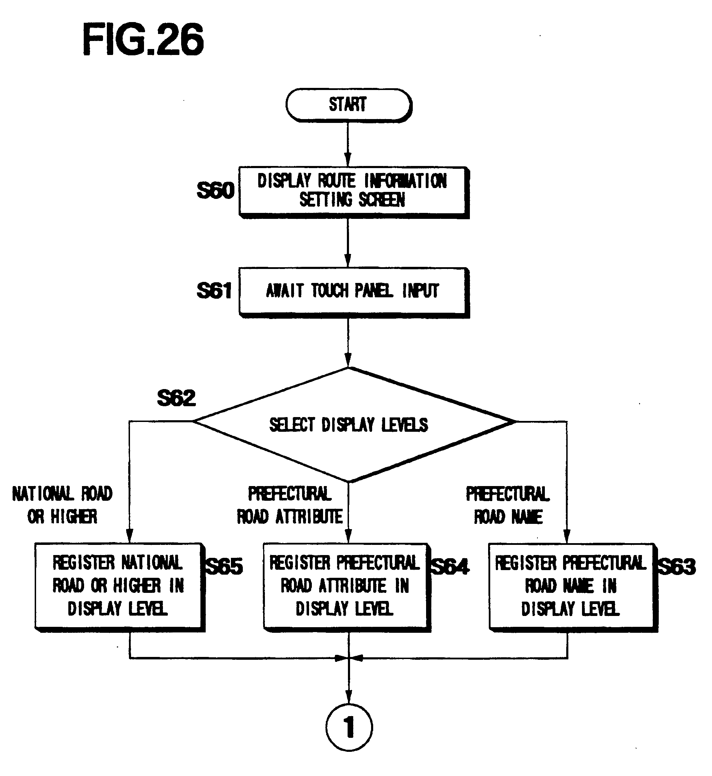

Figs. 26 to 29 are flow charts showing the procedures for processing the display of the route information for the display level selecting function. In the routine of Fig. 26, as the operation to display the route information in the screen, a route information setting screen is displayed (S60) by the screen operating signal which is issued by pushing the route information button in the entire route display screen, for example. An input of the display level selecting signal is awaited (at S61) from the route information setting screen. The selecting signal has its display level analyzed (at S62) when inputted. If the display level is for the prefectural road name, it is registered (at S63) with the prefectural road name. If the display level is for the prefectural road attribute, it is registered (at S64) with the prefectural road attribute. If, moreover, the display level is for the national road or higher, it is registered (at S65) with the national road or higher.

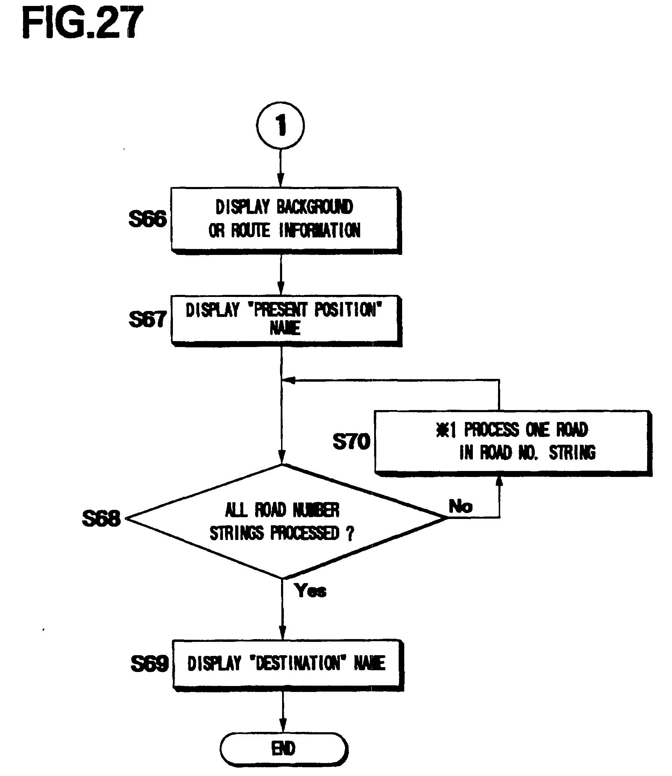

When the display levels are selected through the route information setting screen, the routine shown in Fig. 27 is executed. Specifically, the background of the route information screen is displayed (at S66). After this, the "present position" is displayed (at S67). It is then decided (at S68) whether or not all the road number strings are ended. If the answer is YES, the "destination" is displayed (at S69). If the processing of the road number strings is not ended, on the contrary, one road for the road number strings is processed (at S70).

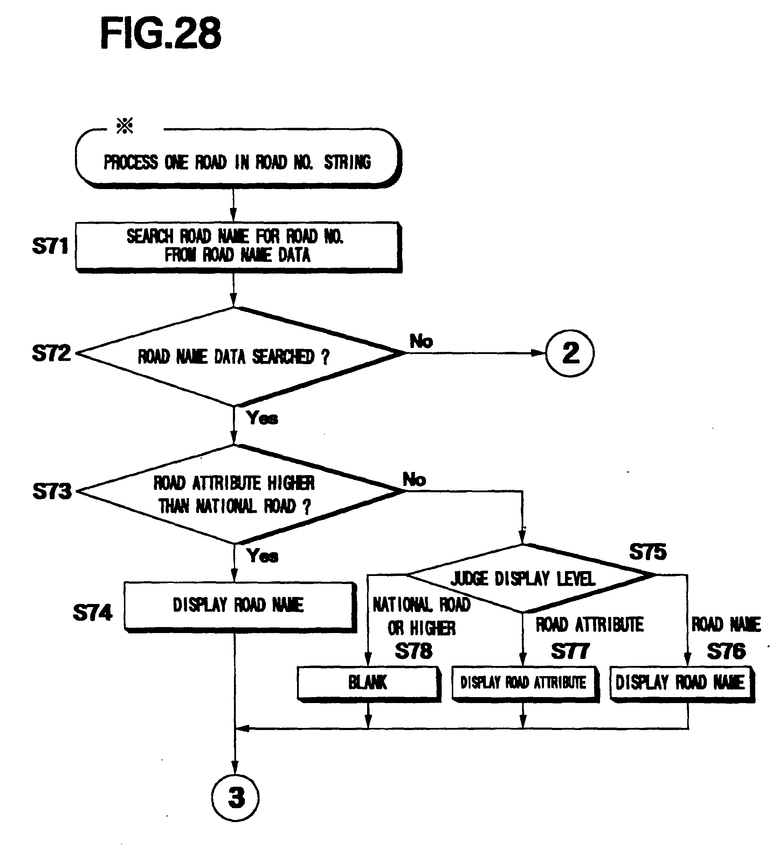

When the processing routine for one road in the road number strings, as shown in Fig. 28, is started, the road name for the road number is searched (at S71) at first from the road name data. It is then decided (at S72) whether or not the road name is searched. If the answer is YES, it is then decided (at S73) whether or not the road attribute is the national road is higher. If the answer is NO, on the contrary, the routine advances to steps S79 and later. If the road name is searched and if the road is the national road or higher, the road name is displayed (at S74), and the branching point name data is searched (at S84) by combining the road number and the next road number. If the road name is not the national road or higher, the selected display level is judged (at S75). As a result: the road name is displayed (at S76) if it is selected ; the road attribute is displayed (at S77) if it is selected ; or the column is blanked (at S78) if the national road or higher is selected. After this, the branching point name data is searched (at S84) by combining the road number and the next road number.

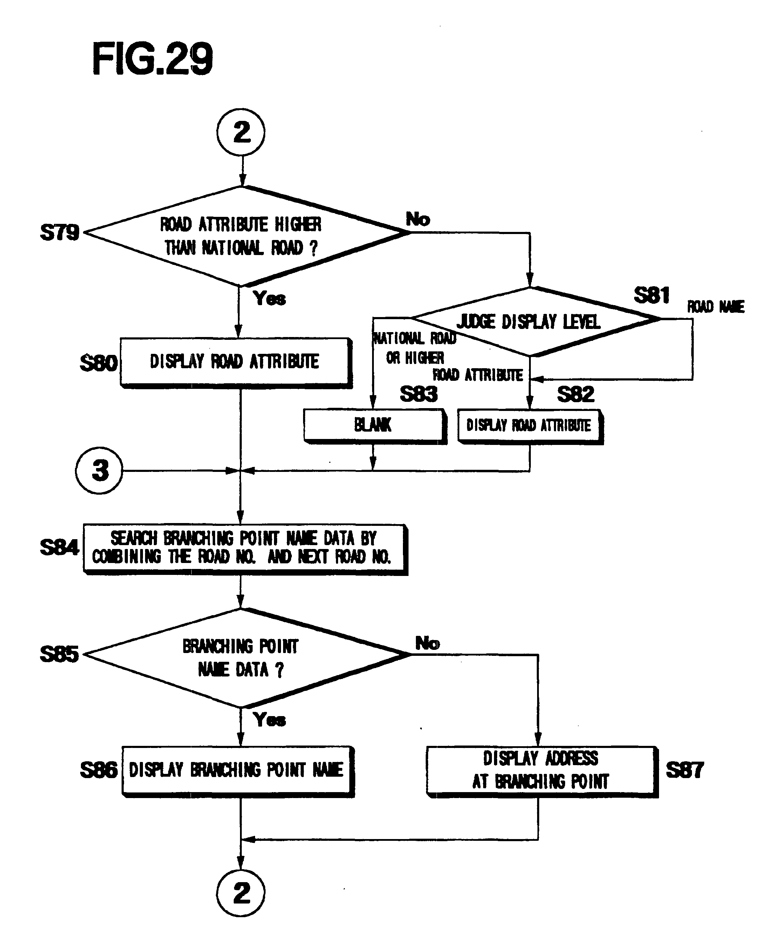

In the routine of Fig. 29, in the absence of the road name data, it is decided (at S79) whether or not the road attribute is the national road or higher. If the answer is YES, the road attribute is displayed (at S80). If the answer is NO, the display level is decided (at S81). If the display for the road name or the road attribute is selected, the road attribute is displayed (at S82). If the national road or higher is selected, on the other hand, the column is blanked (at S83). At the end of these displaying operations, the branching point name data is searched (at S84) by combining the road number and the next road number. On the basis of this search result, it is decided (at S85) whether or not the branching point name data is searched. The branching point name is displayed (at S86) if the branching point name data is searched, but the address of the branching point is otherwise displayed (at S87).

In the present embodiment, the route information is acquired exclusively from the display of the route information screen, but the content of this route information screen may be outputted in speeches. Moreover, the route information is presented by the manual transitions, in which it is displayed on the screen by the scroll key, but by the automatic transitions in which it is automatically displayed. In the present embodiment, furthermore, the route information can be outputted by displaying all the routes from the present position to the destination after the route has been searched, and by displaying the route information button in the screen, but should not be limited thereto. For example. the route information is controlled not to output its signal before it is decided that the vehicle is halted during the route guide, as in case the driver desires to know, at a service area of an express way, the route information ahead.

## Claims

1. A navigation system for guiding a vehicle to a destination along a preselected route including roads, comprising:
a) memory means (3) for storing therein map data and at least road name data;
b) display means (12);
c) input means (11) for permitting input of a destination;
d) present position detector means (2);
e) route search means (4) for searching route information indicative of a route to the input destination from the present position as detected by access of the data stored in said memory means (3);
f) route memory means (4) for storing the route information as determined by said route search means;
g) control means (4);
h) first visualization means (4); wherein
i) said control means (4) is adapted for searching at least for a name of a road responsive to the route information stored in said route memory means;
j) said visualization means (4) is adapted for visually indicating branching points on said running route and the names of the roads between said branching points on said display means
k) display control means (4) are provided for controlling said display means (12) to selectively display either one of a running route screen displaying a running route from the present position of the vehicle to a destination or a route information screen (7) displaying branching points on said running route and the names of the roads between said branching points to the destination searched by said control means (4), both of said different screens being activated in response to manual inputs by users.

2. A navigation system according to claim 1, **characterized in that** said control means (4) lists the road names searched and branching point names and that said visualization means (4) visually indicates the list of said road names and said branching point names as a route information screen.

3. A navigation system according to claim 1 or 2,
**characterized in that**
said visualization means (4) is adapted for visually indicating as a route information screen the road name searched by said control means (4) said branching point name and a present position as detected by said present position detector means (2).

4. A navigation system according to any of claims 1 to 3, **characterized in that** said visualization means (4) visually indicates as a route information screen the read name detected by said control means (4) said branching point name and a range distance on the road which the vehicle has to travel.

5. A navigation system according to any of claims 1 to 4, **characterized in that** said memory means (3) includes route information setter means for setting the display level of said route information.

6. A navigation system according to claim 5, **characterized in that** said route information setter means sets the display level responsive to a road attribute.

7. A navigation system according to any of claims 1 to 6, **characterized by** scroll means for scrolling the route information on said route information screen.

8. A navigation system according to any of claims 1 to 8, **characterized in that** said route information screen (7) displays the travel direction of the vehicle by accessing said route memory means (4), and that said visualization means (4) visually indicates the detected travel direction.

9. A navigation system according to any of claims 1 to 8, **characterized in that** said control means (4) makes use of the route information stored in said route memory means (4) to search for the road name in such a manner that when the road name is present said control means (4) detects this road name and that when the road name is absent said control means detects the road attribute.

10. A navigation system according to any of claims 1 to 9,
**characterized in that**
a) said control means (4) is adapted for accessing said route memory means to search at least for a road name and one or a plurality of branch points;
b) branch-point selector means (4) are provided for selecting one from the searched branch points;
c) said first visualization means (4) is adapted for visually indicating a road name and a branch point as a route information screen, and
d) second visualization means (4) is provided which allows said display means (12) to display thereon a map near the selected branch point.

11. A navigation system according to claim 10, **characterized in that** said control means (4) performs a list processing of the road name and branch point searched, and that said visualization means (4) visually indicates as a route information screen the road name and branch point as list-processed by said control means (4).

12. A navigation system according to claim 10 or 11, **characterized in that** said branch point is a certain point or location whereat the road name is changed.

13. A navigation system according to any of claims 10 to 12, **characterized in that** said branch-point selector means (4) includes a plurality of switch input means as provided in a manner corresponding in number to the plurality of branch points presently displayed on the route information screen, and that upon operation of said switch input means said second visualization means (4) displays a related map near the branch point(s).

14. A navigation system according to any of claims 10 to 13, **characterized in that** said second visualization means (4) displays the vehicle's travel direction at a selected branch point in addition to displaying of the related map near the branch point(s).

15. A navigation system according to any of claims 10 to 14, **characterized in that** said control means (4) makes use of the route information stored in said route memory means (4) to search for the branch-point name in such a manner that when the branch-point name is present said control means detects this name and that when the branch-point name is absent said control means detects an address of the branch-point.

16. A navigation system according to any of claims 10 to 15, **characterized in that** said map visually indicated by said second of visualization means (4) is an enlarged display of the selected branch point.

## Patentansprüche

1. Navigationssystem zum Leiten eines Fahrzeugs entlang einer vorgegebenen Route, die Straßen einschließt, zu einem Ziel, mit:
a) einer Speichereinrichtung (3) zum Speichern von Kartendaten und mindestens Straßennamendaten;
b) einer Displayeinrichtung (12)
c) einer Eingabeeinrichtung (11), die die Eingabe eines Ziels ermöglicht;
d) einer Ist-Positionsdetektoreinrichtung (2);
e) einer Routensucheinrichtung (4) zum Suchen von Routeninformationen, die eine Route von der erfaßten Ist-Position zum eingegebenen Ziel anzeigen, durch Zugriff auf die in der Speichereinrichtung (3) gespeicherten Daten;
f) einer Routenspeichereinrichtung (4) zum Speichern der durch die Routensucheinrichtung bestimmten Routeninformationen;
g) einer Steuereinrichtung (4);
h) einer ersten Visualisierungseinrichtung (4); wobei
i) die Steuereinrichtung (4) dazu geeignet ist, in Antwort auf die in der Routenspeichereinrichtung gespeicherten Routeninformation mindestens einen Straßennamen zu suchen;
j) die Visualisierungseinrichtung (4) dazu geeignet ist, Verzweigungspunkte auf der Fahrtroute und die Namen der Straßen zwischen den Verzweigungspunkten auf der Displayeinrichtung darzustellen;
k) eine Displaysteuerungseinrichtung (4) zum Steuern der Displayeinrichtung (12) zum selektiven Darstellen eines Fahrtroutenbildschirmfensters, das eine Fahrtroute von der Ist-Position des Fahrzeugs zu einem Ziel darstellt, oder eines Routeninformationsbildschirmfensters (7), das die Verzweigungspunkte auf der Fahrtroute und die Namen von Straßen zwischen den Verzweigungspunkten zu dem Ziel darstellt, die durch die Steuereinrichtung (4) gesucht wurden, wobei die beiden verschiedenen Bildschirmfenster in Antwort auf manuelle Eingaben durch Benutzer aktiviert werden.

2. Navigationssystem nach Anspruch 1, **dadurch gekennzeichnet, daß** die Steuereinrichtung (4) die gesuchten Straβennamen und Verzweigungspunktnamen auflistet und die Visualisierungseinrichtung (4) die Liste der Straßennamen und der Verzweigungspunktnamen als ein Routeninformationsbildschirmfenster visuell anzeigt.

3. Navigationssystem nach Anspruch 1 oder 2, **dadurch gekennzeichnet, daß** die Visualisierungseinrichtung (4) dazu geeignet ist, den durch die Steuereinrichtung (4) gesuchten Straßennamen, den Verzweigungspunktnamen und eine durch die Ist-Positionsdetektoreinrichtung (2) erfaßte Ist-Position als ein Routeninformationsbildschirmfenster darzustellen.

4. Navigationssystem nach einem der Ansprüche 1 bis 3, **dadurch gekennzeichnet, daß** die Visualisierungseinrichtung (4) den durch die Steuereinrichtung (4) erfaßten Straßennamen, den Verzweigungspunktnamen und einen Bereichsabstand auf der Straße, auf der das Fahrzeug fahren muß, als ein Routeninformationsbildschirmfenster visuell anzeigt.

5. Navigationssystem nach einem der Ansprüche 1 bis 4, **dadurch gekennzeichnet, daß** die Speichereinrichtung (3) eine Routeninformationssetzeinrichtung zum Setzen der Displayebene der Routeninformationen aufweist.

6. Navigationssystem nach Anspruch 5, **dadurch gekennzeichnet, daß** die Routeninformationssetzeinrichtung die Displayebene in Antwort auf ein Straßenmerkmal setzt.

7. Navigationssystem nach einem der Ansprüche 1 bis 6, **gekennzeichnet durch** eine Scrolleinrichtung zum Scrollen der Routeninformationen auf dem Routeninformationsbildschirmfenster.

8. Navigationssystem nach einem der Ansprüche 1 bis 7, **dadurch gekennzeichnet, daß** das Routeninformationsbildschirmfenster (7) die Fahrtrichtung des Fahrzeugs durch Zugreifen auf die Routenspeichereinrichtung (4) darstellt und daß die Visualisierungseinrichtung (4) die erfaßte Fahrtrichtung visuell anzeigt.

9. Navigationssystem nach einem der Ansprüche 1 bis 8, **dadurch gekennzeichnet, daß** die Steuereinrichtung (4) die in der Routenspeichereinrichtung (4) gespeicherten Routeninformation derart verwendet, um den Straßennamen zu suchen, daß, wenn der Straßennamen vorhanden ist, die Steuereinrichtung (4) diesen Straßennamen erfaßt, und, wenn der Straßennamen nicht vorhanden ist, die Steuereinrichtung das Straßenmerkmal erfaßt.

10. Navigationssystem nach einem der Ansprüche 1 bis 9,
**dadurch gekennzeichnet, daß**
a) die Steuereinrichtung (4) dazu geeignet ist, auf die Routenspeichereinrichtung zuzugreifen, um mindestens einen Straßennamen und einen oder mehrere Verzweigungspunkte zu suchen;
b) eine Verzweigungspunktauswahleinrichtung (4) zum Auswählen eines der gesuchten Verzweigungspunkte vorgesehen ist;
c) die erste Visualisierungseinrichtung (4) dazu geeignet ist, einen Straßennamen und einen Verzweigungspunkt als ein Routeninformationsbildschirmfenster anzuzeigen; und
d) eine zweite Visualisierungseinrichtung (4) bereitgestellt wird, die die Displayeinrichtung (12) veranlaßt, eine Karte der Umgebung des ausgewählten Verzweigungspunktes darzustellen.

11. Navigationssystem nach Anspruch 10, **dadurch gekennzeichnet, daß** die Steuereinrichtung (4) eine Listenverarbeitung des gesuchten Straßennamens und des gesuchten Verzweigungspunktes ausführt, und daß die Visualisierungseinrichtung (4) den Straßennamen und den Verzweigungspunkt, die der Listenverarbeitung durch die Steuereinrichtung (4) unterzogen wurden, als ein Routeninformationsbildschirmfenster visuell darstellt.

12. Navigationssystem nach Anspruch 10 oder 11, **dadurch gekennzeichnet, daß** der Verzweigungspunkt ein bestimmter Punkt oder eine Position ist, wo sich der Straßennamen ändert.

13. Navigationssystem nach einem der Ansprüche 10 bis 12, **dadurch gekennzeichnet, daß** die Verzweigungspunktauswahleinrichtung (4) mehrere Schaltereingabeeinrichtungen aufweist, deren Anzahl der Anzahl der mehreren Verzweigungspunkte entspricht, die aktuell auf dem Routeninformationsbildschirmfenster dargestellt werden, und durch Betätigen der Schaltereingabeeinrichtung die zweite Visualisierungseinrichtung (4) eine entsprechende Karte der Umgebung des Verzweigungspunkts bzw. der Verzweigungspunkte darstellt.

14. Navigationssystem nach einem der Ansprüche 10 bis 13, **dadurch gekennzeichnet, daß** die zweite Visualisierungseinrichtung (4) außer der entsprechenden Karte der Umgebung des Verzweigungspunkts bzw. der Verzweigungspunkte auch die Fahrtrichtung des Fahrzeugs an einem ausgewählten Verzweigungspunkt darstellt.

15. Navigationssystem nach einem der Ansprüche 10 bis 14, **dadurch gekennzeichnet, daß** die Steuereinrichtung (4) die in der Routenspeichereinrichtung (4) gespeicherten Routeninformationen derart verwendet, um den Verzweigungspunktnamen zu suchen, daß, wenn der Verzweigungspunktname vorhanden ist, die Steuereinrichtung diesen Namen erfaßt, und, wenn der Verzweigungspunktname nicht vorhanden ist, die Steuereinrichtung eine Adresse des Verzweigungspunkts erfaßt.

16. Navigationssystem nach einem der Ansprüche 10 bis 15, **dadurch gekennzeichnet, daß** die durch die zweite Visualisierungseinrichtung (4) visuell dargestellte Karte eine vergrößerte Darstellung des ausgewählten Verzweigungspunkts ist.

## Revendications

1. Système de navigation servant à guider un véhicule jusqu'à une destination suivant un itinéraire présélectionné incluant des routes, comprenant :
a) un moyen formant mémoire (3) servant à enregistrer des données de carte et au moins des données de nom de route;
b) un moyen d'affichage (12);
c) un moyen d'entrée (11) permettant d'entrer une destination;
d) un moyen de détection (2) de la position actuelle;
e) un moyen de recherche (4) d'itinéraire servant à rechercher des informations d'itinéraire indiquant un trajet jusqu'à la destination entrée à partir de la position actuelle détectée par un accès aux données enregistrées dans ledit moyen formant mémoire (3);
f) un moyen formant mémoire d'itinéraire (4) servant à enregistrer les informations d'itinéraire déterminées par ledit moyen de recherche d'itinéraire;
g) un moyen de commande (4);
h) un premier moyen de visualisation (4); dans lequel
i) ledit moyen de commande (4) est adapté pour rechercher au moins le nom d'une route correspondant aux informations d'itinéraire enregistrées dans ledit moyen formant mémoire d'itinéraire;
j) ledit moyen de visualisation (4) est adapté pour indiquer visuellement des embranchements sur ledit itinéraire courant et le nom des routes entre lesdits embranchements, sur ledit moyen d'affichage;
k) des moyens de commande d'affichage (4) sont prévus pour commander ledit moyen d'affichage (12) pour afficher sélectivement soit un écran d'itinéraire courant affichant un itinéraire courant à partir de la position actuelle du véhicule jusqu'à une destination soit un écran (7) d'informations d'itinéraire affichant les embranchements sur ledit itinéraire courant et le nom des routes entre lesdits embranchements jusqu'à la destination recherchés par ledit moyen de commande (4), les deux dits différents écrans étant activés en réponse à des entrées manuelles effectuées par des utilisateurs.

2. Système de navigation selon la revendication 1, **caractérisé en ce que** ledit moyen de commande (4) liste les noms de routes recherchés et les noms d'embranchements et **en ce que** ledit moyen de visualisation (4) indique visuellement la liste desdits noms de routes et desdits noms d'embranchements en tant qu'écran d'informations d'itinéraire.

3. Système de navigation selon la revendication 1 ou 2, **caractérisé en ce que** ledit moyen de visualisation (4) est adapté pour indiquer visuellement en tant qu'écran d'informations d'itinéraire le nom de route recherché par ledit moyen de commande (4), lesdits noms d'embranchements et une position actuelle détectée par ledit moyen de détection (2) de la position actuelle.

4. Système de navigation selon l'une quelconque des revendications 1 à 3, **caractérisé en ce que** ledit moyen de visualisation (4) indique visuellement en tant qu'écran d'informations d'itinéraire le nom de route détecté par ledit moyen de commande (4), lesdits noms d'embranchements et une distance sur la route que le véhicule doit parcourir.

5. Système de navigation selon l'une quelconque des revendications 1 à 4, **caractérisé en ce que** ledit moyen formant mémoire (3) comporte un moyen d'établissement d'informations d'itinéraire servant à établir le niveau d'affichage desdites informations d'itinéraire.

6. Système de navigation selon la revendication 5, **caractérisé en ce que** ledit moyen d'établissement d'informations d'itinéraire établit le niveau d'affichage correspondant à un attribut de route.

7. Système de navigation selon l'une quelconque des revendications 1 à 6, **caractérisé par** un moyen de défilement servant à faire défiler les informations d'itinéraire sur ledit écran d'informations d'itinéraire.

8. Système de navigation selon l'une quelconque des revendications 1 à 7, **caractérisé en ce que** ledit écran (7) d'informations d'itinéraire affiche la direction de déplacement du véhicule en accédant audit moyen formant mémoire d'itinéraire (4), et **en ce que** ledit moyen de visualisation (4) indique visuellement la direction de déplacement détectée.

9. Système de navigation selon l'une quelconque des revendications 1 à 8, **caractérisé en ce que** ledit moyen de commande (4) utilise les informations d'itinéraire enregistrées dans ledit moyen formant mémoire d'itinéraire (4) pour rechercher le nom de route de telle manière que lorsque le nom de route est présent ledit moyen de commande (4) détecte ce nom de route et que lorsque le nom de route est absent ledit moyen de commande détecte l'attribut de route.

10. Système de navigation selon l'une quelconque des revendications 1 à 9, **caractérisé en ce que**
a) ledit moyen de commande (4) est adapté pour accéder audit moyen formant mémoire d'itinéraire pour rechercher au moins un nom de route et un ou plusieurs embranchements;
b) des moyens de sélection d'embranchement (4) sont prévus pour choisir l'un des embranchements recherchés;
c) ledit premier moyen de visualisation (4) est adapté pour indiquer visuellement un nom de route et un embranchement en tant qu'écran d'informations d'itinéraire, et
d) un second moyen de visualisation (4) est prévu, permettant audit moyen d'affichage (12) d'afficher dessus une carte près de l'embranchement choisi.

11. Système de navigation selon la revendication 10, **caractérisé en ce que** ledit moyen de commande (4) exécute un traitement de liste du nom de route et de l'embranchement recherchés, et **en ce que** ledit moyen de visualisation (4) indique visuellement en tant qu'écran d'informations d'itinéraire le nom de route et l'embranchement tels que traités en liste par ledit moyen de commande (4).

12. Système de navigation selon la revendication 10 ou 11, **caractérisé en ce que** ledit embranchement est un certain point ou emplacement où le nom de route change.

13. Système de navigation selon l'une quelconque des revendications 10 à 12, **caractérisé en ce que** ledit moyen de sélection d'embranchement (4) comporte plusieurs moyens d'entrée formant interrupteur prévus d'une manière qui correspond en nombre aux plusieurs embranchements actuellement affichés sur l'écran d'informations d'itinéraire, et **en ce que** lors du fonctionnement desdits moyens d'entrée formant interrupteur ledit second moyen de visualisation (4) affiche une carte correspondante près du ou des embranchement(s).

14. Système de navigation selon l'une quelconque des revendications 10 à 13, **caractérisé en ce que** ledit second moyen de visualisation (4) affiche la direction de déplacement du véhicule à un embranchement choisi en plus de la carte correspondante près du ou des embranchement(s).

15. Système de navigation selon l'une quelconque des revendications 10 à 14, **caractérisé en ce que** ledit moyen de commande (4) utilise les informations d'itinéraire enregistrées dans ledit moyen formant mémoire d'itinéraire (4) pour rechercher le nom d'embranchement de telle manière que lorsque le nom d'embranchement est présent ledit moyen de commande détecte ce nom et que lorsque le nom d'embranchement est absent ledit moyen de commande détecte l'adresse de l'embranchement.

16. Système de navigation selon l'une quelconque des revendications 10 à 15, **caractérisé en ce que** ladite carte indiquée visuellement par ledit second moyen de visualisation (4) est un agrandissement de l'embranchement choisi.
